# EUROPEAN PATENT APPLICATION

(11) **EP 1 626 375 A1**
(43) Date of publication of application: **15.02.2006**
(21) Application number: 04425625.3
(22) Date of filing: 10.08.2004
(51) Int. Cl.: G07F 9/02

(54) **Apparatus and method for dispensing machine control**

(71) Applicant: Tuttoespresso S.p.a., 21042 Caronno Pertusella (IT)
(72) Inventor: Doglioni Majer, Luca, 22010 Carate urio (Como) (IT)
(74) Representative: Gislon, Gabriele

(57) **Abstract**

In order to control the status and the operation of a dispensing machine assembly comprising one or more modules or sub-assemblies, at least one of modules or sub-modules is provided with an electronic tag and the machine is provided with a tag controller device for interacting with said tag by reading, writing and transmitting information data on or through said tag and operating said dispensing machine according to the information gathered from said tag or tags.

## Description

The present invention relates to an apparatus and a method for controlling dispensing machines. More particularly, the invention relates to an electronic-tag based apparatus and method for controlling an electrically operated dispensing machine.

In the present application the wording "dispensing machines" generally refers to both vending and dispensing machines, i.e. to machines including a means of payment of the dispensed product (vending machines), and machines without a means of payment of the dispensed product (dispensing machines). Exemplary vending machines are those for selling to the public newspapers, flowers, CDs, drinks, snacks and similar products; exemplary dispensing machines are machines for dispensing hot and cold beverages, foodstuff, etc. as can be found e.g. in hotel lobbies or airport lounges or even as a domestic appliance.

Usually, more recent dispensing machines are provided with different electromechanical components or modules (and eventually sub-modules) interconnected one to another via electrical or digital signals. A modular design allows for a reduction of costs associated to the maintenance of the machines. In fact the modules are usually designed to ensure reduced dismantling time and, consequently, to permit an easy replacement in case of breakage also by non specialized personnel, with no need for shipping the machine to the technical assistance plant.

For instance, a typical modular espresso coffee and cappuccino dispensing machine (the assembly) may be composed of several modules (sub-assemblies) comprising one module for brewing coffee from roasted coffee beans, one module for reconstituting liquid milk from granulated de-hydrated milk and another module for water filtration, plus the controller module. In this instance, the module for brewing coffee may be composed by the actual brewing unit, at least one solenoid valve, pump, coffee-grinder motor, brewing-unit motor, dosing device and water-heating device.

Known dispensing machines have several drawbacks that derive mainly from being subject to heavy use and located in many different places, and to conditions of use and maintenance routines.

Modules as well as all the standard mechanical, electrical or electromechanical components of vending machines have a limited life-span, usually expressed in terms of "hours of operation" or "number of executed cycles" or other values such as "liters of water", "number of cups", total vends and similar. Also, machines dispensing hot drinks can run according to different procedures according to the product to be dispensed, this resulting in a quicker use of the "life-span" of, e.g. the coffee module with respect to the "milk module".

To avoid breakdowns of the machine and interruption of the sales or of the dispensing services, a periodical maintenance should be carried out. Such a maintenance is extremely expensive even in the modular dispensing machines and the increasing labour cost is forcing service companies in charge of such maintenance to become extremely accurate in the use of their time.

A further problem derives from the fact that traditional dispensing machines do not allow for inhibiting the activation of specific modules by specific users. For example, it is desirable for the manufacturer or the owner of a vending machine, for example a coffee dispensing machine, to limit one or more functions of the machine to the loaner or to a specific user or group of users of the same machine.

Thus, there is the need for an active control of the dispensing machines, of their modules and components and of their operation, including the kind and amount of product that is dispensed by the machine. For example, it is desirable to collect all the information regarding the operation of the modules, their compatibility, life-span, scheduled/executed maintenance, power consumption, etc.

Dispensing machines are known being provided with systems for reading information stored in electronic tags, mostly transponders or RFID devices (RFIDs), which are secured to the products to be delivered to the customers by means of the dispensing machine.

RFID tags are low-cost, miniaturised "smart" chips generally containing an embedded antenna for transmitting and receiving data to and from a reader (or a scanner) separated from the tags. Generally, electronic tags are attached or secured by the manufacturer to the product packages before the same packages are loaded into the vending machines. The tags may contain several data, such as identification codes, anti-adulteration codes, instructions for the related vending machine, the expiration date of a certain product, etc..

CA 2437137 to Lindsay and Reade discloses a dispensing machine wherein the products in the machine are associated with a smart tag that contains information regarding the food product contained therein. A smart tag scanner is incorporated with the dispensing machine and used to retrieve the product information from the smart tags.

WO 01/17893 to Saveliev and Shuster discloses food and beverage containers having attached or connected transponders. A transponder exciter is placed in or near the food or beverage dispenser for energizing the transponder on the food or beverage container, and for discerning information therefrom. The information from the containers can be used to track the containers and control the type and amount of consumable material with which the containers are filled.

WO 03/005295, to Thomas, Cardwell and Hu, concerns an apparatus and the related method for providing tags readable by vending machines, such as programmable RFID tags. Tags include machine-readable information regarding a product to be processed and/or delivered to a customer. For example, the tag may include identification information in electronic form for the product to avoid unauthorized products to be used in the machine.

US-A-6354468, to Riek, discloses a trasponder placed on a container adapted to be opened via an electromagnetically activated stopper valve located on a vending machine.

Electronic tags are also provided for carrying out the inventory of the products. For example, US patent application number 2003/0030539 discloses a vend audit apparatus and method for tracking inventory in a vending machine. The technique includes loading items having tags into a dispensing machine, sensing the tags, and transferring information to a control circuit provided within the machine.

Tracking of the products to be loaded into vending machines, as well as dispensing machines, etc., is achieved by way of passive RFID tags provided within the products, as described in WO 01/26047.

Electronic tags may be secured in different ways to a product depending on the nature of the same product. European patent application EP 615285 discloses a method for applying transponders to a substrate, such as cardboard packaging material, by adhering an integrated circuit to the substrate, applying a patch antenna to the substrate and the integrated circuit, and applying a sealing layer over the integrated circuit and at least a portion of the antenna.

Other systems are known for embedding or securing an integrated circuit to different products by way of adhesive labels, clips, etc.

All the previously mentioned documents relates to apparatus and methods that are intended to provide a correlation between the products to be delivered by a dispensing machine and the machine itself.

The above disclosed known apparatus and methods do not take into account internal operation of the machines, i.e. tags contain information about the foodstuff to be delivered by a machine, but when the machine operates, it operates recognize the data according to preset automatic procedures.

Thus, there still is a necessity for providing an active control over the various components or the modules of the vending machines. More particularly, there is a need for a dispensing machine that could provide an improved and new control on the machine operation and on the consumables associated with the dispensing machine operation.

It is an object of the present invention to solve the above mentioned problems and to provide an apparatus and the related method for checking and controlling the operation and the state of dispensing machines and their modules or consumables. To this regard, the wording "consumables" is intended to mean any kind of module that is subject to wear or consumption; e.g. a pump having a life-span of 200 operation hours is a "consumable" because after the 200 hours are used the pump has to be serviced, but also a container for food products is a module and is a "consumable" according to the present invention: e.g. a container for 3 kg of coffee beans is a module that can be removed and changed or re-filled when it is empty (at the end of its life-span) and is therefore a "consumable" in the sense of this application.

It is another object of the present invention to provide an apparatus and the related method for collecting data related to the operation and/or on the state of one or more modules/components of dispensing machines and eventually for transmitting such data to the manufacturer or service-provider of the same machines.

It is a further object of the present invention to provide an apparatus and the related method for selectively inhibiting the functions of a vending machine depending on the identity of the proprietor, holder or loaner and/or on the state of each of the components or modules.

It is a further object of the present invention to provide an apparatus, easy to assemble and relatively unexpensive, wherein the status and the operating conditions of the dispensing machine can be detected in an easy and quick way.

These and other objects are achieved by the present invention which concerns a vending machine assembly comprising one or more modules or sub-assemblies, characterized in that at least one of said modules is provided with a readable memory device, or tag, and said machine comprises a device for interacting with said memory device.

According to a preferred embodiment, at least one of said modules comprises two or more sub-modules or components and at least one of said sub-modules comprises a tag.

According to a preferred embodiment, the tag can be written, preferably several times, and the device interacting with said tag, is a tag reading and writing device. In other words, in the preferred embodiment, the interacting device, i.e. the tag controller, is able to both read and alter the data contained in the component. The tag controller comprises a tag scanner and a CPU for controlling the machine operation.

A further object of the invention is a method of controlling the assembly, operation and/or servicing of a dispensing machine assembly comprising one or more modules or sub-assemblies, characterized in comprising the steps of: providing at least one of said modules with a readable memory device, or tag; providing said machine with a tag controller device for interacting with said tag; reading and/or writing data on said tag by means of said tag controller and operating said dispensing machine according to the information gathered from said tag or tags.

The invention provides several advantages over the known art.

By identifying with a tag the module or the module component, the controller can ascertain which is the current machine configuration, e.g. a coffee + milk (granulated) + tea dispensing machine. Thus, the machine will be ready to accept only a product module, or sub-assembly component, according to its "configuration-table", that is all the configurations of assemblies or sub-assemblies that the dispensing machine can accept. If a different product module is inserted, e.g. a chocolate tray, that should not be processed by the machine with its actual modules, the wrong module is identified and the control device (controller) does not authorize the processing of the chocolate from the inserted tray.

Moreover, when the machine is serviced, it is possible to ascertain the "history" of the module or component that is under maintenance and track back the module or component effective usage. Also quality control is made easier, in that electronic tags may store identification codes, readable only by the controller, which guarantee the full compatibility of a module or tray or component with the machine's desired specifications (e.g. voltage etc.).

Another advantage is that it is possible to handle limitations to the use of the machine with unauthorized modules or components, including modules comprising food products, and with modules the life-span of which is expired and that could be dangerous if used (e.g. a boiler).

A still further advantage results from the use of a re-writeable tag: in fact, the number of hour of service can be written on the tag; similarly, in a food product module, the amount of food (e.g. coffee powder) used can be written on the tag module, that will have a consumable portion that decreases with time.

The invention will now be described in greater detail with reference to the drawings enclosed as a non-restrictive example, where:
- figure 1 is a scheme of a dispensing machine according to the invention;
- figure 2 is a scheme of another dispensing machine provided with an apparatus according to the present invention;
- figure 3 is a scheme of a further dispensing machine according to the invention;
- figure 4 is a scheme of a still further dispensing machine;
- figure 5 is a scheme of a module for the machine of fig. 4;
- figure 6 is a scheme of still another dispensing machine; and
- figure 7 is a diagram of the functioning of a machine according to the invention.

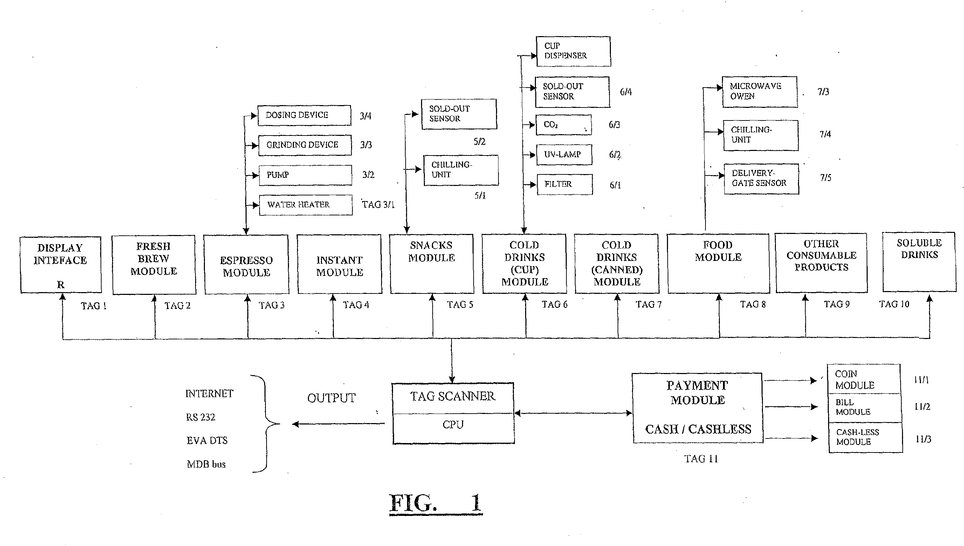

Figure 1 refers to a dispensing machine provided with several modules, sub-modules and components each having a specific function. In particular figure 1 is a scheme which shows the internal logic layout of a dispensing machine for dispensing snacks, foodstuff, cold drinks, espresso coffee, etc., each product being prepared and dispensed by the related module. The sub-assemblies are indicative of one possible configuration for some modules without restricting the amount of sub-modules or modules and combinations thereof that can comprise one specific dispensing system.

Modules may comprise several sub-modules or components. For example, the module "ESPRESSO" will comprise a power unit, a dosing device, a pump, a boiler, a grinder or similar devices. Similarly, the module "COLD DRINKS" will comprise sub-module for processing cold drinks including a filter, a UV lamp, a CO₂ (carbonating unit) sub-module and a sold-out sensor. In fig. 1 each module and each sub-module or component is provided with a tag; tags of submodules are numbered according to the module tag, i.e. tags for component and sub-modules of espresso module having tag 3 are referenced to as tags 3/1,3/2,3/3 and 3/4.

To interact with the client/operator a display module and a control panel for receiving instructions by the users are usually provided, even if they are not shown in all the figures.

The machine of fig. 1 is a vending machine and is provided with a payment module comprising a manual payment system, i.e. a module for collecting coins, or with a cashless payment system, i.e. a magnetic card or (as hereinafter discussed) a tag or a transponder reader; a bill validator (banknote reader) sub-module is also provided.

Each module is connected to a control unit CPU (control processing unit) by way of traditional electrical connections. The CPU is provided with a tag scanner, i.e. means for reading the tags, and controls the operation of the modules depending on the instructions received by the manufacturer or by the user or also by the actual owner of the machine. The tag scanner can be separate from the CPU and located away from it but, obviously, is connected to the same (by wire or wireless means).

In operation, when a customer requests an espresso coffee, the CPU activates according to a pre-set procedure the module "ESPRESSO" which operates for preparing and dispensing such beverage according to the preferences indicated by the customer. Customers usually interact with the control unit through a display or a control panel. Typically, users may ask for a particular item or combination of items of a preset menu shown on the machine itself, the control panel or the display.

Products to be dispensed may be loaded into the machine already packed, e.g. canned drinks and snacks, or may be instantly prepared by one or more modules from ingredients which are stored into suitable reservoirs of the same machine, e.g. espresso, fresh brew and cold drinks in a cup. For example, snacks are usually loaded into suitable trays provided within the machine in their own wrapping, while hot beverages are usually prepared by one or more modules from basic ingredients, like de-hydrated milk, cocoa powder, sugar or the like, stored in containers that are part of a food module of the dispensing machine.

Traditional apparatuses for controlling the operation of the dispensing/vending machines may provide tags linked to the products to be dispensed to the customers. Such tags are readable from the CPU and may contain several data, such as identification codes, anti-adulteration codes, instructions for the CPU concerning, for example, the operation of the modules. A tag applied to a food module loaded into the vending machine may contain instruction for the CPU to control the operation time of the UV lamp of the module "COLD DRINKS", or the temperature of the water processed by the boiler of the module "ESPRESSO". Such system is disclosed, for example, in WO 03/005295.

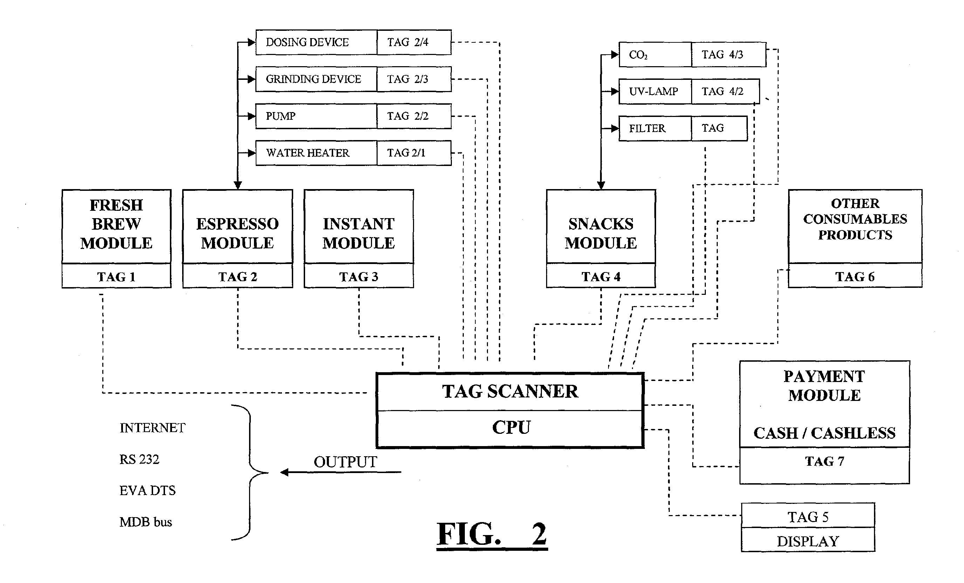

Figure 2 is a scheme of a further dispensing machine provided with an apparatus according to the present invention. The machine comprises six modules and some sub-modules or components such as motors, filters, etc., that are disclosed with the relevant tags. The apparatus comprises at least one readable memory device, or tag, linked to a module and a memory reader device (tag scanner) connected to the CPU or placed within the machine or remotely located, separated from the machine but connected to it. All these possible locations of the tag controller with respect to the dispensing machine fall within the scope of the definition in claim 1 "said machine comprises a controller device".

In fact, a possible embodiment of the invention comprises two (or more) dispensing machines, in which a first dispensing machine (master) houses the tag scanner and the CPU, and one or more further dispensing machines (slave) are provided with modules with tags and are connected to the first machine. The tag controller of the first machine controls the operation of the whole group of machines.

As above mentioned, the readable memory device is an electronic tag. The tag may be a passive tag or an active one. For example the tag may be a RFID device. Preferably, an electronic tag is applied to each module or sub-module/component of the dispensing machine. More preferably, also the sub-modules (sub-assemblies) and the components are supplied with electronic tags. Tags can be physically attached to the related module, for example embedded in a component of the hardware, or they can be independent and physically detached from the same. As will be later discussed more in detail, this is the case when the module relates to consumables such as the food product to dispense: in an advantageous embodiment there is only one tag which takes into account the total amount of food product (e.g. 3 kg coffee or 300 coffee units) and that is not located on the single product package but is separate from it.

Passive tags have no power unit of their own and transmit data or information regarding the related module to the CPU reader or to any suitable device for processing such data, when an interrogation signal is generated for example by the CPU reader or by an equivalent device. The interrogation signal is, in this instance, also an activation signal which also powers the tag. Active tags have their own power supply and, consequently, they can transmit said data or information to any suitable receiving device independently, that is regardless of whether an external interrogation signal is provided.

Due to the relatively high cost of the active electronic tags, the apparatus of the invention preferably provides passive tags. Nevertheless, some embodiments of the apparatus may comprise at least one active tag, for example interfaced with a sensor and applied to the most important module(s) or sub-assembly of the machine, e.g. to the boiler, in order to sense its condition, e.g. the boiler pressure and temperature, and inform the controller if there is a deviation of the element from the standard conditions. Such a sensor-tag is disclosed e.g. in US-A-6546795.

Suitable passive tags are the RFIDs by Fujitsu or by ST-Microelectronics such as ST SRIX512 or XRA00; a suitable tag scanner is e..g. ST CRX-14. These tags are preferably provided with a write-once,read-many memory and a with re-writable memory.

In a preferred embodiment of the machine, tags 1-14 are RFIDs having a first writable memory and a second re-writable memory. Preferably, the tag has a read-only portion, a write-once portion and re-writable portion. Each tag is associated to a module or sub-assembly or a component of the machine and communicates with a tag scanner linked to the CPU. The tag scanner may be separated from the CPU, and may be located within the machine or outside in a remote location. What is essential is that the tag scanner can read the electronic tags 1-14 and access the information or the data stored within the tags 1-14. This can be accomplished in a known way: for example the scanner generates an RF interrogation signal which activates the tags 1-14. The tags 1-14, once activated, transmit the information saved in their memories to the scanner, by way of RF signals, for allowing a successive processing of such information by the CPU. Information or data may be saved in the tags 1-14 as codes.

The tag will transmit information data concerning the status of the component, if it comprises a sensing device such as the one described in the above mentioned US patent 6546795.

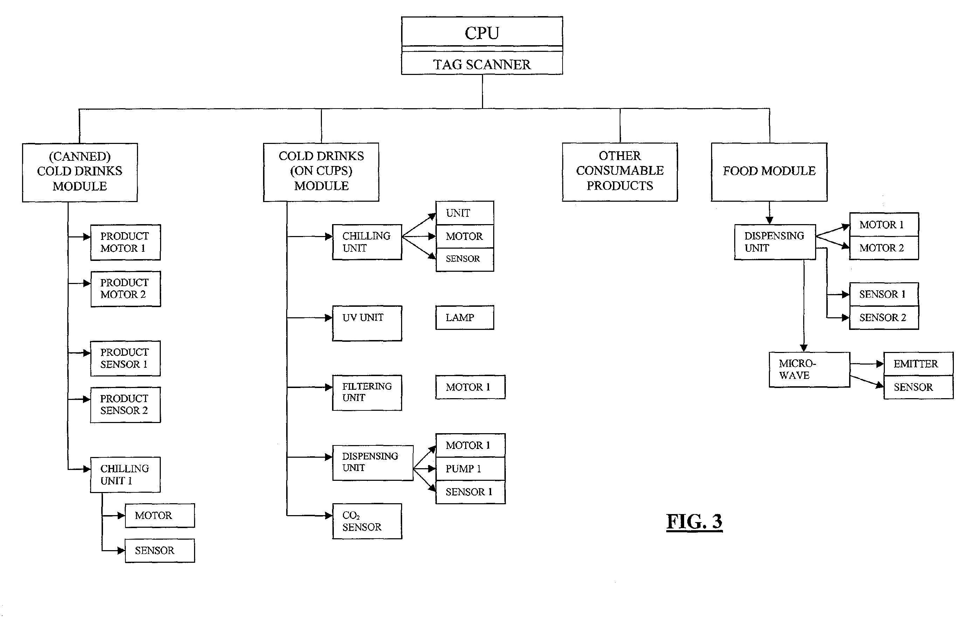

Figures 3-6 disclose further embodiments of the invention dispensing machine provided with sensors. It is understood that also in these embodiments the modules and submodules/components are provided with tags, some of the tags being connected with a sensor. E.g., in the embodiment shown in fig. 3 the chilling units and the dispensing unit are provided with a sensor for the pump and a sensor for the temperature of the chilling unit; a sensor-tag for the CO₂ unit is also present.

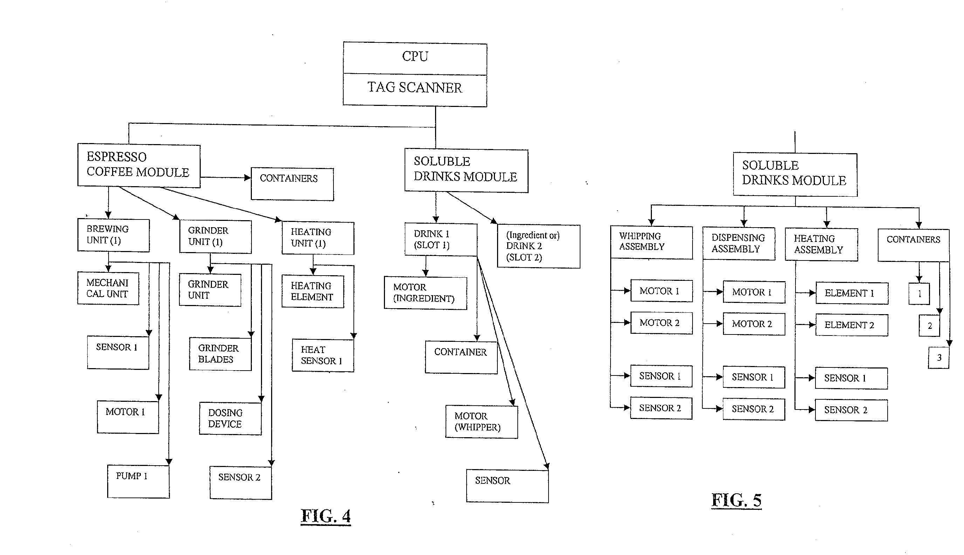

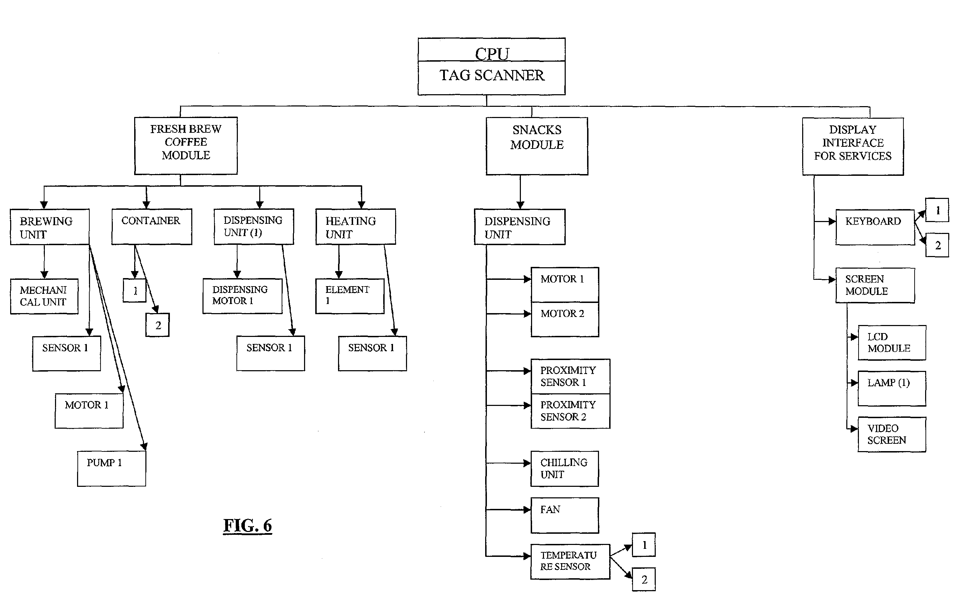

Fig. 5 shows an alternative module for the soluble drinks module of the dispensing machine of fig. 4, where an espresso module is detailed. the soluble drinks module, e.g. granulated milk and tea, is provided with two whipping, dispensing and heating sub-sub-modules in view of the different processing requirements (water temperature, amount of product etc.) of milk vs. tea. Thus, two motors are provided for the whipping and dispensing assemblies and two heating elements are provided for the heating sub-module; each module, sub-module and component is provided with a tag or a tag-and-sensor. The dispensing machine of fig. 6 is also exemplary of an embodiment of the invention and details the display/interface module.

Table 1 and table 2 show a non limiting example of information which can be saved in a tag. In particular, table 1 refers to a dispensing machine with a coffee (assembly 1) and a chocolate module (assembly 2). The assembly 1 comprises three sub-assemblies 1-3, namely an espresso module, a boiler and a grinder motor. The espresso module is comprising two sub-sub-assemblies: a motor 5 and an infusion module 6, each being provided with a tag according to the present invention.

The tag of the boiler sub-assembly 2 has a serial number (002) which is saved in the read-only memory by the manufacturer of the tag, for example ST-Microelectronics. The tag may also contain an identification code of the sub-assembly 2 (101) that is written in the write-once memory portion of the tag by the manufacturer of the dispensing machine. In a preferred embodiment the ID code of the module or component is obtained from the serial number saved in the read-only memory by the tag manufacturer by modifying said code through an algorithm. In other words, when the tag is secured to the module, the tag controller reads said first ID code data in the read-only memory, elaborates said first data through an algorithm and writes said elaborated data in a write-once portion of the writable memory of the tag as an ID data: only the tags that have the serial number elaborated according the correct algorithm are acceptable and "authentic" modules.

In this way the CPU, upon receiving such information from the tag scanner, will control that the ID tag is obtained through the correct algorithm and then allow for the operation of the sub-assembly 2 which is recognized as an endorsed part of the machine provided by the same manufacturer with preset quality standards.

The tag may also provide information regarding the operating parameters of the module which is applied to. As shown in table 1, a code may be stored in the tag to specify that the module runs at 230 Volts, AC current and absorbs 4 Amperes. The writeable memory portion of the tags of the dispensing machine of table 1 example is also provided with a quality assurance code that is written in the tag memory specifying by whom or how the module or the component was tested for quality before leaving the manufacturer's premises.

Moreover, the tags are provided with their initialization date, i.e. the date of the first use of the sub-assembly or sub-sub-assembly. This date is written on the write-once memory portion of the tag, and is written in the factory or by the CPU when the dispensing machine is assembled. In the example of table 1 the initialization date is shown as 01/01/2004 for the coffee components and as 10/10/2003 for the chocolate dispenser assembly 2. From this information the CPU is able to distinguish if a module which is inserted or plugged into the machine is new or refurbished.

The electronic tag may also contain information regarding the expected life-span of the related module, in terms of operating hours (10000 hours) or cycles (1000 coffees dispensed). In this way the CPU can send a warning message, through the machine display or in any other suitable way (see e.g. output in fig. 1), requesting technical assistance when a sub-assembly is getting close to the end of its expected life-span, allowing for its "just in time" replacement.

It should be understood that the apparatus according to the present invention permits to enhance the control of the internal parts of the dispensing/vending machines. When a module with its electronic tag is connected to a machine provided with the apparatus of the invention, the CPU, through the tag scanner, can collect all the information regarding the said module. First, compatibility of the new module with the machine is checked by the CPU; once the CPU collects the "sensible data" of the new module, the same CPU can adapt itself, and the way the machine works, to the new configuration, thus allowing for a "plug and play" connection of the new module or assembly if the latter module is a version endorsed by the dispensing machine software.

Thanks to the re-writable memory, the tags of the dispensing machine are provided with an internal counter, which can be used to track the effective usage of the modules. For example, every time a beverage is dispensed by the machine, the beverage being prepared for example by the module ESPRESSO, the tag scanner writes on tag 2 that one cycle has been carried out.

Considering table 1, CODE 1 and CODE 2 are counters for the tags of the ESPRESSO module sub-assemblies 5 and 6. These codes actually give an information about the usage of the related sub-assembly, i.e. the CPU will collect this information and compare the cycles executed by the sub-assemblies with the total cycles provided in their life-span, thus getting an indication of the residual life-span of the sub-assemblies.

Table 2 shows the information data contained in the tags of the sub-modules and sub-assemblies listed in the first column and is given as a further non-limiting example.

The presence of the writeable and rewriteable memory is of great interest in those assemblies that are involved with food product containers such as the chocolate dispenser.

As previously explained, a problem of the state of the art dispensing machines is to have a control over the products that are fed to the dispenser. The solution found up to now was to provide each single portion (e.g. each snack or each single-portion package of coffee, tea or chocolate) with a bar code or a tag having an ID code authorizing the machine to use it.

This solution proved to be very expensive and unpractical in that it requires a huge data bank of the codes of the product packages. A tag on a bulk container, e.g. on a container of coffee beans or of chocolate powder, provides a cheaper solution but this solution could be circumvented by refilling the container (that has the authorized ID code) with unauthorized products once the original ones are finished.

By using a tag with a re-writable memory, it is possible to keep an account of the amount of product used so as to compare this amount, e.g. in the form of number of coffees made, with the original amount. Such writing can easily be carried out e.g. by having an original memory of 100 coffees on the tag and by progressively reduce it upon each coffee that is brewed by the machine until a zero amount is reached. The container condition is now as follows: a tag code in the read-only memory, a tag code in the write-once memory that takes into the account the first time the tag was connected with the tag scanner, and the re-writable memory now set to zero products. The container cannot be refilled with unauthorized products because the memory says zero products are present and if a re-filled but unauthorized container is inserted into the dispensing machine, the memory will again read zero, thus blocking any product from being dispensed. If the food container is disposable, the new one will have again an initial 100 coffee setting. If the food container is not thrown away, the setting of the empty container should be brought back to 100 once the container is re-filled.

In order to set back the food container memory to 100 coffees, a tag is associated to a fresh amount of food even without being secured to the food package. This tag has a memory instructing the tag scanner to accept another 100 coffees or to correspondingly re-write the food container tag and can be attached e.g. to a piece of paper such as the invoice for a coffee amount corresponding to 100 coffees. When the "invoice tag" is shown to the tag scanner, it will be read and the scanner will re-set the number of coffees back to 100.

As previously mentioned, in a further embodiment of the present invention, at least one tag is an active electronic tag interfaced with a sensor having the function to sense an operative parameter or a condition of the machine. For example the sensor may be a pressure sensor or a temperature sensor for measuring, respectively, the pressure and the temperature inside the boiler. Another sensor could be a flowmeter or a proximity sensor to detect the distance between the blades of the coffee bean grinder. This configuration allows for the control of the internal operation of the modules: when the tag senses an unacceptable the value of the temperature inside the boiler, this information is transmitted to the CPU (through the tag scanner), the CPU will, possibly after comparing this value with a reference value, activate a new independent routine as a feedback to this information, e.g. increasing or reducing the heating of the water. Similarly, when the proximity sensor detects a value of the inter-blade distance greater than acceptable, it will activate through the tag scanner and CPU a feedback routine that will move the grinder blades closer to each other.

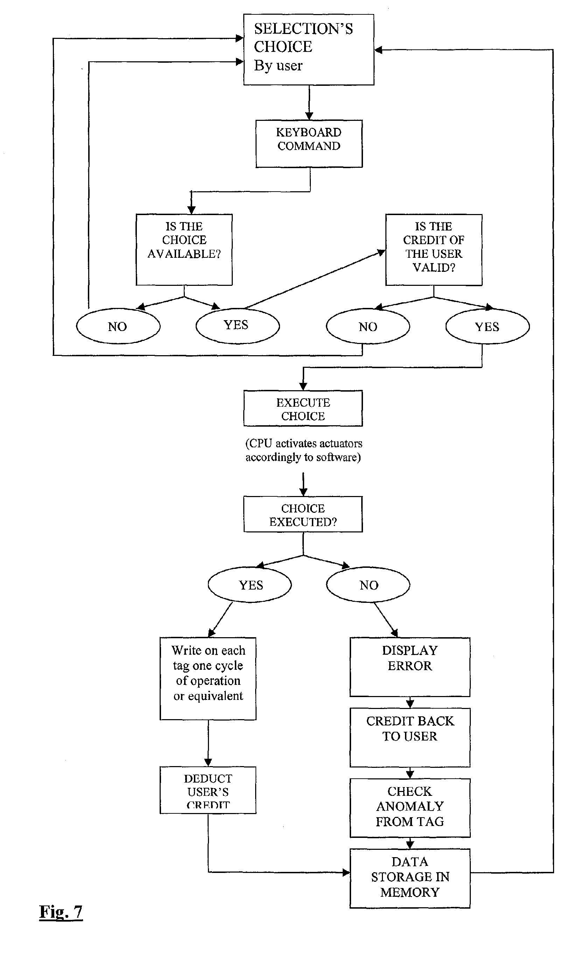

Fig. 7 is a non-limiting example of operation of a dispensing machine. The user will select a choice on the keyboard through the keyboard command. If the choice is available, i.e. if the module corresponding to the selected choice, e.g. cappuccino, is present and in operating condition, the CPU will then check if the user is authorized to select the chosen option. If this is the case the CPU will actuate the module(s) to carry out the selected choice and, once it has been carried out and the cappuccino dispensed, it will write on the memory of each tag involved that one cycle has been performed. This writing ca be expressed through other ways depending on the module, such ways could be the amount of product used or the volume of water used etc.

The above disclosed dispensing machine is also useful when a control of its operation depending on the user is required, In this case the user is the holder of an ID tag containing a defined consumable amount of "operating capacity" that will allow the user to access all or only some of the dispensable products by enabling or disenabling the corresponding modules. E.g. in a firm the employees have a right to a fixed amount of free coffee per day but to a cappuccino or a chocolate, the latter products being obtainable only upon payment.

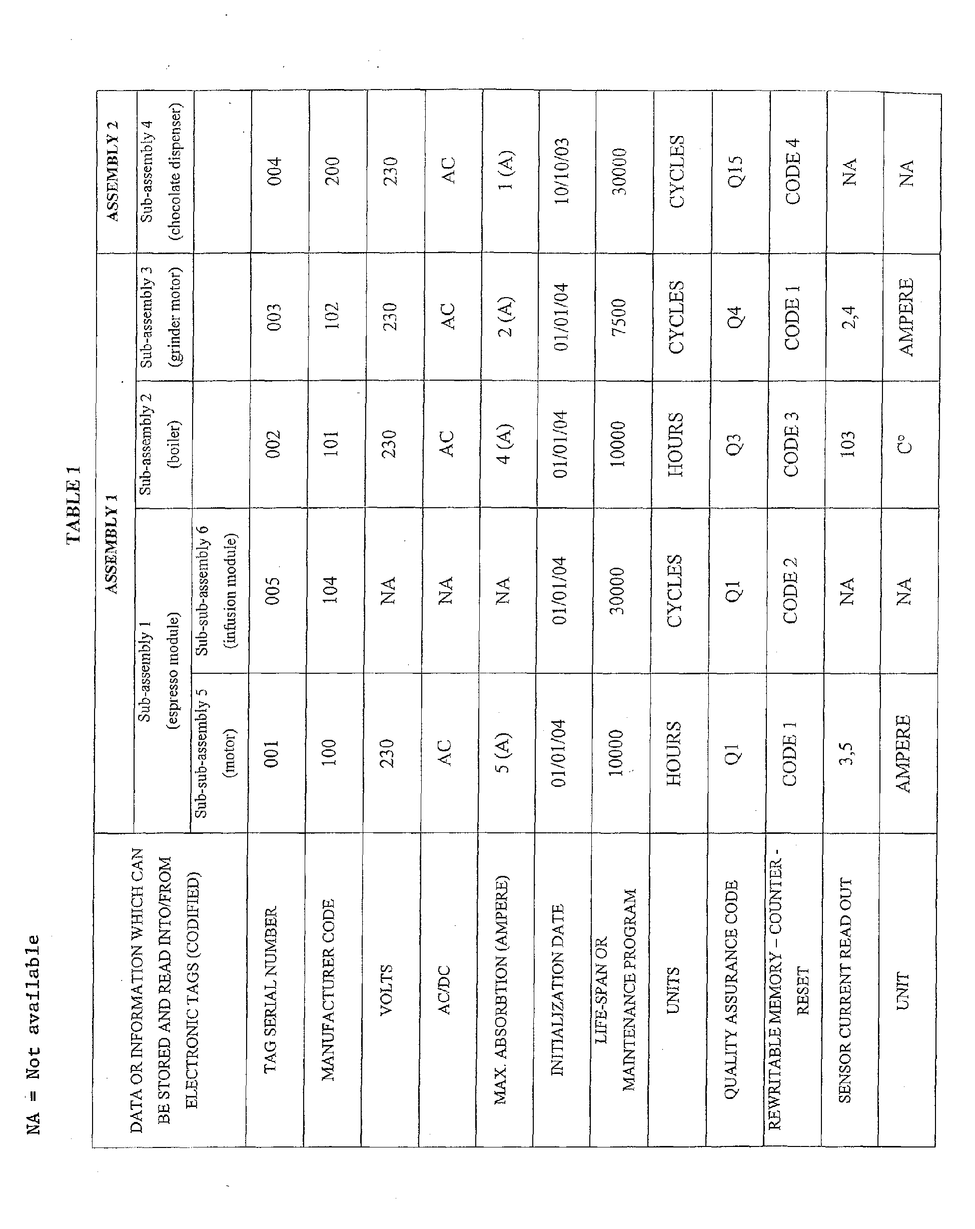

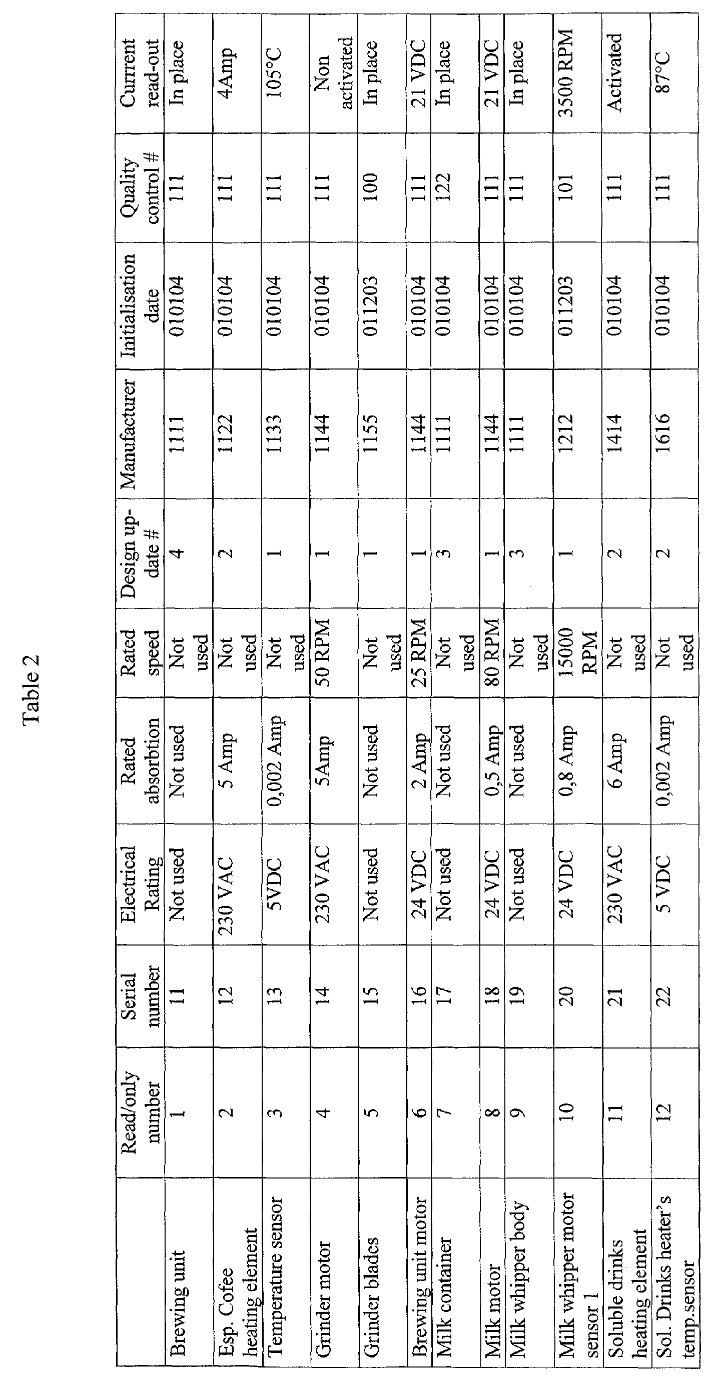

## Claims

1. A dispensing machine assembly comprising one or more modules or sub-assemblies, **characterized in that** at least one of said modules is provided with a readable memory device, or tag, and said machine comprises a controller device for interacting with said memory device.

2. A dispensing machine according to claim 1, wherein said tag has a write-once memory portion.

3. A dispensing machine according to claim 1 or 2, wherein said tag has a re-writable memory portion.

4. A dispensing machine according to any previous claim, wherein at least one of said modules comprises two or more sub-modules and at least one of said sub-modules comprises a tag.

5. A dispensing machine according to any previous claim, comprising at least one tag having a sensor for detecting a condition of the dispensing machine.

6. A dispensing machine according to any claim 2 to 5, wherein the tag comprises a read-only memory containing first data and a second memory portion containing second data, said second data containing said first data written through a coding algorithm.

7. A dispensing machine according to any claim 3 to 6, wherein said module is a food product module comprising a food product container.

8. A dispensing machine according to claim 7, wherein the tag of said food product container is detached from said container and has data concerning an amount of consumables.

9. A method of controlling the operation of a dispensing machine assembly comprising one or more modules or sub-assemblies, **characterized in** comprising the steps of: providing at least one of said modules with a readable memory device, or tag; providing said machine with a tag controller device for interacting with said tag; reading and/or writing and/or transmitting information data on or through said tag by means of said tag controller and operating said dispensing machine according to the information gathered from said tag or tags.

10. A method according to claim 9, wherein the tag is provided with a read-only memory comprising first data and a writable memory and wherein said controller reads said first data, elaborates said first data through an algorithm and writes said elaborated data in a write-once portion of the writable memory on the said tag.

11. A method according to claim 9 or 10, wherein said first data are tag identification data written on a read-only memory of said tag by the tag producer.

12. A method according to claim 9 or 10, wherein said data comprises characteristics of the modules and/or components of the machine assembly, comprising the step of reading and checking said data and writing further data on said tag when their quality control is carried out.

13. A method according to any claim 9 to 12, wherein said controller reads the data of a module tag, compares said data with an acceptable machine configuration and allows operation of said module only if said module is within said acceptable machine configuration.

14. A method according to any claim 9 to 13, wherein said tag detects a condition of a component or module of said machine by means of a sensor and the relevant data are fed to said tag controller.

15. A method according to claim 9 or 10, wherein said module is associated with a tag having a re-writable memory portion, comprising the steps of writing information data on said tag after each operation of the module and of inhibiting the operation of said module upon a pre-set information data is reached and until said information data is cancelled through an authorized operation.

16. A method according to claim 15, wherein said module is a food product container.

17. A method according to claim 16, wherein said authorized operation is carried out by means of a tag supplied with said food products.

18. A method according to claim 15 to 17, wherein said information data is selected from the number of performed operations and/or the number of remaining cycles before exhaustion of the module life-span.

19. A method according to any claim from 9 to 18, wherein said information data are written on a portable tag and transferred to a data bank.
